# EUROPÄISCHE PATENTANMELDUNG

(11) **EP 1 496 343 A2**
(43) Veröffentlichungstag der Anmeldung: **12.01.2005**
(21) Anmeldenummer: 04016088.9
(22) Anmeldetag: 08.07.2004
(51) Int. Cl.: G01H 9/00

(54) **Verfahren und Messeinrichtung zur Aufzeichnung der Bewegungsspur von Beobachtungspunkten an schwingenden Gegenständen**

(30) Priorität: 08.07.2003 DE 10330946
(71) Anmelder: Wente, Holger, Dipl.-Ing., 38108 Braunschweig (DE)
(72) Erfinder: Wente, Holger, Dipl.-Ing., 38108 Braunschweig (DE)
(74) Vertreter: Gerstein, Hans Joachim

(57) **Zusammenfassung**

Eine Messeinrichtung zur Aufzeichnung der Bewegungsspur von Beobachtungspunkten an schwingenden Gegenständen (3), die mit einer periodischen Schwingung beaufschlagt werden, mit mindestens einer Messmarke (2) zur optischen Markierung mindestens eines Beobachtungspunktes auf den Gegenständen (3) und einer elektronischen Beobachtungskamera (10) ist so ausgebildet, dass in Abhängigkeit von der Frequenz der beaufschlagten periodischen Schwingung die Belichtungszeit der Beobachtungskamera (10) zur Aufzeichnung einer in mindestens einer Schwingungsperiode ausgeführten Bewegungsspur oder die Belichtungszeit und Bildfolgefrequenz aufeinanderfolgender Bildaufnahmen zur Aufzeichnung von verschiedenen Teilstücken einer Bewegungsspur einstellbar ist.

## Beschreibung

Die Erfindung betrifft eine Messeinrichtung zur Aufzeichnung der Bewegungsspur von Beobachtungspunkten an schwingenden Gegenständen, die mit einer periodischen Schwingung beaufschlagt werden, mit mindestens einer Messmarke zur optischen Markierung mindestens eines Beobachtungspunktes auf den Gegenständen und einer elektronischen Beobachtungskamera.

Die Erfindung betrifft weiterhin ein Verfahren zur Messung von Schwingungsvorgängen an schwingenden Gegenständen durch Aufzeichnung der Bewegungsspur von Beobachtungspunkten, die mit mindestens einer Messmarke optisch markiert sind.

Bei Anregung eines Gegenstandes, z. B. eines nicht starren Körpers, zu Schwingungen ist an einzelnen Stellen des Gegenstandes zu beobachten, dass diese Beobachtungspunkte in der Regel der Anregung unterschiedlich folgen.

Bei zu untersuchendem Verhalten von Gegenständen unter Schwingungseinfluss sind dabei insbesondere die Grenzlagen von Interesse, die den Beobachtungspunkt einnehmen können, sowie die Schwingungsparameter, die zu diesen Grenzlagen führen.

Das Schwingungsverhalten spielt beispielsweise bei Teilen in Kraftfahrzeugen, insbesondere bei leuchtweiten- und kurvenfahrtregulierten Scheinwerfern eine Rolle.

Zur Schwingungsanalyse werden herkömmlicherweise Piezobeschleunigungsaufnehmer an den jeweiligen Beobachtungspunkten angebracht. Der Beschleunigungsverlauf des jeweiligen Beobachtungspunktes führt unter Kenntnis der Anfangsbedingungen durch Integration des Beschleunigungssignals zu einem Geschwindigkeitsverlauf und nach erneuter Integration zum Verlauf des Weges, den dieser Beobachtungspunkt zurückliegt.

Für dieses Messverfahren sind jedoch Kenntnisse von Anfangsbedingungen und Rechenoperationen erforderlich, durch die hindurch sich Messunsicherheiten fortpflanzen.

In dem US-Patent 4,899,218 ist ein kontaktloses optisches Messgerät zur Reifenüberprüfung beschrieben, um mindestens zwei Konturlinien der Reifenoberfläche zu beleuchten werden die durch Videokameras aufgenommenen Konturlinien außerhalb der optischen Ebene des strukturierten Lichtes positioniert.

In der DE 42 12 426 C1 ist ein Verfahren und eine Vorrichtung zur Bestimmung von Spur und Sturz von Achsen der Räder eines Kraftfahrzeugfahrwerks beschrieben, wobei auf jedem Rad eine optisch registrierbare Markierung von zwei synchronisierten Fernsehkameras aus zwei verschiedenen Richtungen aufgezeichnet wird. Aus den Raumlagen der Markierungen auf den um ihre Achsen gedrehten Rädern werden die Relativstellungen der Achsen zu den Fernsehkameras rechnerisch ermittelt.

In dem US-Patent 5,023,845 ist ein Verfahren zur zweidimensionalen Messung von Verschiebungen von Proben mit einem Fotodetektorfeld und mit in der Probe eingebetteten optischen Fasern beschrieben. Der Austrittspunkt der optischen Phase wird von dem Fotodetektorfeld und einer CCD-Kamera beobachtet.

In der JP 2002267577 A ist eine Messvorrichtung zur Messung des Radsturzes eines Kraftfahrzeuges mit einem Laserprojektor und mit CCD-Kameras beschrieben.

Ein Laserprojektor ist an einem Beobachtungspunkt des Reifens angeordnet ist und der Laserstrahl wird auf eine entfernt von dem Gegenstand angeordnete Mattscheibe der CCD-Kamera projiziert, wobei die projizierte Bewegungsspur aufgezeichnet wird.

In der WO 00/63659 ist ein Verfahren und eine Vorrichtung zur Messung der Eigenschaften von oszillierenden Bewegungen beschrieben, wobei die Schwingungsbewegung mit einer Videokamera mit einer sich über mehrere Schwingungsperioden erstreckenden Belichtungszeit aufgenommen wird.

In der JP 05099736 A ist ein Verfahren zur Frequenzanalyse eines schwingenden Gegenstandes beschrieben, der mit einem Referenzpunkt markiert ist. Der Referenzpunkt wird mit einer CCD-Kamera oder einem Zeilensensor beobachtet. Die Belichtungszeit wird in Abhängigkeit von der Frequenz der periodischen Schwingung eingestellt.

Das Problem der bekannten Messeinrichtung besteht darin, die Bildqualität über einen Frequenzbereich ohne Unter- und Überbelichtung optimal einzustellen.

Aufgabe der Erfindung ist es daher, eine verbesserte Messeinrichtung zur Aufzeichnung der Bewegungsspur von Beobachtungspunkten an schwingenden Gegenständen zu schaffen, die bei optimierter Bildqualität eine preiswerte, einfach zu handhabende und genaue Messung ermöglicht.

Die Aufgabe wird mit der gattungsgemäßen Messeinrichtung erfindungsgemäß dadurch gelöst, dass in Abhängigkeit von der Frequenz der beaufschlagten Schwingung die Belichtungszeit der Beobachtungskamera zur Aufzeichnung mindestens einer vollständigen in einer Schwindungsperiode ausgeführten Bewegungsspur oder die Belichtungszeit und Bildfolgefrequenz aufeinanderfolgender Bildaufnahmen zur Aufzeichnung von verschiedenen Teilstücken einer Bewegungsspur eingestellt ist.

Es wird somit vorgeschlagen, die Bewegungspunkte mit einer Beobachtungskamera aufzuzeichnen eine Bewegungsspur oder ein Teil davon vollständig durch Einstellen der Belichtungszeit und/oder Bildfolgefrequenz aufgenommen wird.

Aufgrund der Periodizität der erzwungenen Schwingung, mit der der zu beobachtende Gegenstand fremderregt wird, stellt sich eine Periodizität der erzwungenen Schwingungen und damit der Bewegungsspur ein. Daher wird, wenn die Belichtungszeit länger als eine Schwingungsperiode gewählt ist, eine bereits aufgezeichnete Bewegungsspur entsprechend nachgezeichnet.

Bei einer kürzeren Belichtungszeit kann der Schwingungsverlauf einer Bewegungsspur einer Periode nicht mehr vollständig auf einem Bild abgebildet werden. Dann muss jedoch die Bildfolgefrequenz so eingestellt werden, dass die einzelnen Teilstücke der Bewegungsspur möglichst nahtlos in einer Folge von Bildern aneinandergereiht sind. Allerdings muss die Belichtungszeit so groß gewählt sein, dass immer noch eine ausreichende Lichtmenge zur Abbildung der Bewegungsspur auf den Sensor der Beobachtungskamera trifft.

Als Messmarke kann vorzugsweise ein an dem Gegenstand an einem Beobachtungspunkt angeordneter Umlenkspiegel eingesetzt werden, wobei ein auf dem Umlenkspiegel gerichteter Laser und eine entfernt von dem Gegenstand angeordnete Mattscheibe zur Projektion des am Umlenkspiegel reflektierten Laserstrahls vorgesehen ist. Die Beobachtungskamera ist dabei auf die Mattscheibe zur Aufzeichnung der projizierten Bewegungsspur ausgerichtet. Anstelle des Umlenkspiegels kann alternativ eine Laserdiode direkt aufgebracht werden.

Bei dem Einsatz eines Umlenkspiegels ist allerdings zu beachten, dass eine Auslenkung des Beobachtungspunktes über die Spiegelreflektion einen doppelt so großen Ausschlag auf der Mattscheibe erzeugt, als bei der direkten Beobachtung eines Leuchtpunktes an dem Beobachtungspunkt.

Folgerichtig erfolgt eine Winkeländerung entsprechend mit doppelter Winkelgeschwindigkeit und der Laserpunkt bewegt sich mit doppelter Geschwindigkeit auf der Mattscheibe gegenüber einem unmittelbar von dem Beobachtungspunkt auf die Mattscheibe projizierten Leuchtpunkt.

Zudem ist zu berücksichtigen, dass eine translatorische Verschiebung des Umlenkspiegels auf der Spiegelebene kaum. einen Messeffekt hervorruft. Eine Verdrehung des Umlenkspiegels führt hingegen zu hohen Ausschlägen, insbesondere dann, wenn der Abstand zwischen dem Umlenkspiegel und der Mattscheibe relativ groß ist.

In einer anderen Ausführungsform ist mindestens eine Lichtleitfaser vorgesehen, wobei das mindestens eine Ende der Lichtleitfaser oder eines Lichtleitfaserbündels als Messmarke an der mindestens ein Beobachtungspunkt des Gegenstandes angebracht ist. In dieser Ausführungsform werden die leuchtenden Enden der Lichtleitfaser lediglich durch die Beobachtungskamera ohne Einsatz einer Mattscheibe beobachtet. Eine Projektion findet somit nicht statt.

Als Messmarken können auch selbstleuchtende, reflektierende oder Farb-Messmarken vorgesehen sein. Dabei können als selbstleuchtende Messmarken beispielsweise Laserdioden eingesetzt werden, die ein Laserstrahl auf eine Mattscheibe projizieren.

Vorzugsweise sind Regelungsmittel zur Einstellung einer Blende der Beobachtungskamera und/oder der Helligkeit der Messmarken in Abhängigkeit von der Helligkeit von Teilen der aufgezeichneten Bewegungsspur vorgesehen. Damit kann eine Über- und Unterbelichtung der Bewegungsspur ausgeglichen werden, die insbesondere an den Wendepunkten einer Bewegungsspur auftreten.
Weiterhin ist vorteilhaft, wenn Auswertemittel zur Auswertung der aufgezeichneten Bewegungsspur bei jeweils einer festgelegten Frequenz der periodischen Schwingung durch Bestimmung der maximalen Auslenkung der Bewegungsspur in horizontaler, vertikaler oder anderer Richtung als Schwingungskenngrößen vorgesehen sind. Dies kann beispielsweise Bestimmung der maximalen Auslenkung der Bewegungsspur in Bezug auf ein beliebig angeordnetes karthesisches Koordinatensystem mit Hilfe von rechnergestützten Bildauswerteverfahren erfolgen. Der Nullpunkt des Koordinatensystems wird dabei vorzugsweise durch die Ruhelage des Leuchtpunktes bzw. Laserstrahls festgelegt und die Koordinatenachsen sind parallel zu den lichtempfindlichen Elementen der Kamera ausgerichtet.

Aus der Vielzahl der für die variierenden Frequenzen aufgezeichneten relativen maximalen Auslenkungen können nun die absoluten maximalen Auslenkungen ermittelt und die zugehörigen Frequenzen als Resonanzfrequenzen erkannt werden.

Weiterhin ist es vorteilhaft, wenn die Auswertemittel zur Bestimmung der örtlichen Geschwindigkeit der Leuchtpunkte der Bewegungsspur aus der Helligkeit der Leuchtpunkte ausgebildet sind. Bei der Aufzeichnung einer vollständigen Bewegungsspur ist nämlich eine zeitliche Auflösung aus dem aufgezeichneten Bild der Bewegungsspur nicht ohne weiteres möglich. Unter der Annahme eines konstant leuchtenden Leuchtpunktes ist die Bewegungsspur in unmittelbarer Abhängigkeit von der örtlichen Geschwindigkeit unterschiedlich hell. Dabei erfährt die Bewegungsspur bei einfachen Sinusschwingungen in den Amplituden einen Geschwindigkeitsnulldurchgang und in dem Wendepunkt ein Geschwindigkeitsmaximum, wobei die Amplituden besonders hell aufgenommen werden, da hier der Leuchtpunkt länger über einem Bildpixel der Beobachtungskamera verweilt, als es beispielsweise im Wendepunkt der Sinusschwingung der Fall ist.

Allerdings sollte die Belichtungszeit genau eine Periodendauer oder ein ganzteiliges Vielfaches davon betragen, um sicherzustellen, dass Mehrfachbelichtungen jeweils die gesamte Schwingung betreffen und nicht als Geschwindigkeitssprung interpretiert werden.

Vorteilhaft ist es, wenn die Auswertemittel eine abgespeicherte Vergleichstabelle mit einer Vielzahl von Helligkeitswerten der Leuchtpunkte und zugeordneten örtlichen Bewegungsgeschwindigkeiten haben, die in Abhängigkeit von Belichtungszeiten oder von Perioden der periodischen Erregerschwingung aufgenommen wurden. Die örtliche Bewegungsgeschwindigkeit wird dann aus der Vergleichstabelle in Abhängigkeit von aktuell gemessenen Leuchtpunkt-Helligkeitswerten und der aktuell eingestellten Belichtungszeit oder Periodendauer ausgelesen.

Die Vergleichstabelle wird in einem Einmessvorgang aufgenommen, beispielsweise indem mit einem rotierenden Laser, dessen Austrittsstrahl zur Rotationsachse einen Versatz aufweist oder divergiert, eine Bewegungsspur mit gleichförmiger Geschwindigkeit durch einen kreisenden Laserpunkt mit konstanter Hellligkeit auf der Mattscheibe beschrieben wird. Wenn die Kreisfrequenz bei der Einmessung beispielsweise konstant gewählt wird, erfolgt eine Variation der Umfangsgeschwindigkeit durch Verstellen des Versatzes oder des Divergenzwinkels des Lasers. Die jeweils eingestellte Bewegungsgeschwindigkeit berechnet sich aus dem Kreisumfang, der beispielsweise direkt von den gemessenen Pixel-Koordinaten der aufgenommenen Bewegungsspur abgeleitet wird, und aus der vorgegebenen Kreisfrequenz. Damit können für jede Periodendauer bzw. Belichtungszeit Bewegungsgeschwindigkeiten und deren zugehörige Leuchtpunkt-Helligkeitswerte aufgenommen werden.

Weiterhin können die Auswertemittel eine abgespeicherte Vergleichstabelle mit einer Vielzahl von in Abhängigkeit vom Durchmesser eines Leuchtpunktes aufgezeichnete Helligkeitswerte des Leuchtpunktes haben. Aus der aufgezeichneten Bewegungsspur und den zugehörigen Helligkeitswerten wird dann eine idealisierte Bewegungsspur durch Verminderung der Bewegungsspurbreite um die aus der Vergleichstabelle jeweils für die Leuchtpunkte ausgelesenen Durchmesser berechnet.

Auf diese Weise kann die Breite der aufgezeichneten Bewegungsspur angepasst werden, die im Idealfall gegen Null gehen sollte.

Es wird also vorgeschlagen, eine ideale Bahn der aufgezeichneten Bewegungsspur durch Verringerung der jeweiligen Spurbreite um ein in Abhängigkeit von der Helligkeit durch einen vorherigen Einmessvorgang bestimmtes Maß zu reduzieren.

Im Unterschied hierzu wird herkömmlicherweise bei der Aufzeichnung von Bildpunkten ein Schwerpunkt zur Bestimmung der idealen Koordinate des Bildpunktes gebildet.

Zur dreidimensionalen Bestimmung der Bewegungsspur werden vorzugsweise mindestens zwei auf denselben Bildbereich ausgerichtete Beobachtungskameras eingesetzt.

Die Aufgabe wird weiterhin mit dem gattungsgemäßen Verfahren erfindungsgemäß gelöst durch die Schritte:
- Beaufschlagen des Gegenstandes mit einer periodischen Schwingung,
- Einstellen der Belichtungszeit einer Beobachtungskamera zur Aufzeichnung mindestens einer vollständigen in einer Schwingungsperiode ausgeführten Bewegungsspur oder der Belichtungszeit und Bildfolgefrequenz aufeinanderfolgender Bildaufnahmen zur Aufzeichnung von verschiedenen Teilstücken einer Bewegungsspur in Abhängigkeit von der Frequenz der periodischen Schwingungen, und
- Aufzeichnen der Bewegungsspur.

Insbesondere zur Bestimmung der Bewegungsgeschwindigkeit bzw. der Beschleunigung der Bewegung eines Leuchtpunktes auf der Bewegungsspur und daraus abgeleitet des Beobachtungspunktes ist es vorteilhaft, das Lichtsignal für die optische Markierung zu modulieren. Dies kann z. B. durch Pulsen des Lichtoder Laserstrahls (digitale Modulation), durch Aufmodulieren einer Schwingung oder Farbwechselmodulation (analoge Modulation) erfolgen. Vorteilhaft ist auch eine Codierung des Lichtsignals beispielsweise durch Farbcodierung oder gezieltes Auslassen einzelner Lichtsignal, um hieraus die Bewegungsrichtung aus der codierten Bewegungsspur abzuleiten.

Als Modulationsparameter können beispielsweise die Modulationsfrequenz, die Modulationsphasenlage und das Tastverhältnis eingestellt werden. Die Modulationsfrequenz sollte dabei so gewählt, dass der interessierende Schwingungsbereich eine möglichst hohe Ortsfrequenz und damit eine entsprechend hohe zeitliche Auflösung aufweist. Bei Mehrfachbelichtungen ist es vorteilhaft, wenn die modulierte Bewegungsspur an denselben Orten jeweils deckungsgleiche Unterbrechungen aufweist. Dies wird dann erreicht, wenn die Modulationsfrequenz in einer konstanten Phasenbeziehung zur erzwungenen Schwingung steht. Das kann dadurch herbei geführt werden, dass die Erregerschwingung, mit der der Gegenstand beaufschlagt wird, jeweils nach Ablauf einer Periode die Modulationsschwingung synchronisiert, z. B. durch Zurücksetzen (reset).

Durch Einstellung der Modulationsphasenlagen, d. h. der Phasenlage der Modulationsschwingung zur Erregerschwingung können die Schwingungsunterbrechungen auf dem eigenen Schwingungsverlauf hin und her geschoben werden.

Durch Einstellung des Tastverhältnisses der Modulationsschwingung kann die Intensität des Lichtsignals und damit die Belichtung des Bildaufnehmers eingestellt werden. Damit kann die Belichtung des Bildaufnehmers stufenlos und unabhängig von der aufzuzeichnenden Schwingung optimal geregelt werden.

Die Erfindung wird nachfolgend anhand der beigefügten Zeichnungen beispielhaft näher erläutert. Es zeigen:
- Figur 1-: schematische Darstellung einer ersten Ausführungsform einer erfindungsgemäßen Messeinrichtung mit Laser, Umlenkspiegel und Mattscheibe;
- Figur 2-: schematische Darstellung einer zweiten Ausführungsform einer erfindungsgemäßen Messeinrichtung mit Leuchtdiode und Beobachtungskamera;
- Figur 3 -: spielhaftes Diagramm einer Bewegungsspur bei einer festgelegten Frequenz der Erregerschwingung;
- Figuren 4 bis 14 -: eine Folge von Bewegungsspuren bei ansteigenden Frequenzen für die Erregerschwingung;
- Figur 15 -: schematische Darstellung der Messeinrichtung aus Figur 1 zur Untersuchung von Schwingungen an Fahrzeugscheinwerfern;
- Figur 16 -: Skizze einer Messeinrichtung zur Ermittlung der Lageänderung der Hell-Dunkel-Grenze eines Fahrzeugscheinwerfers.

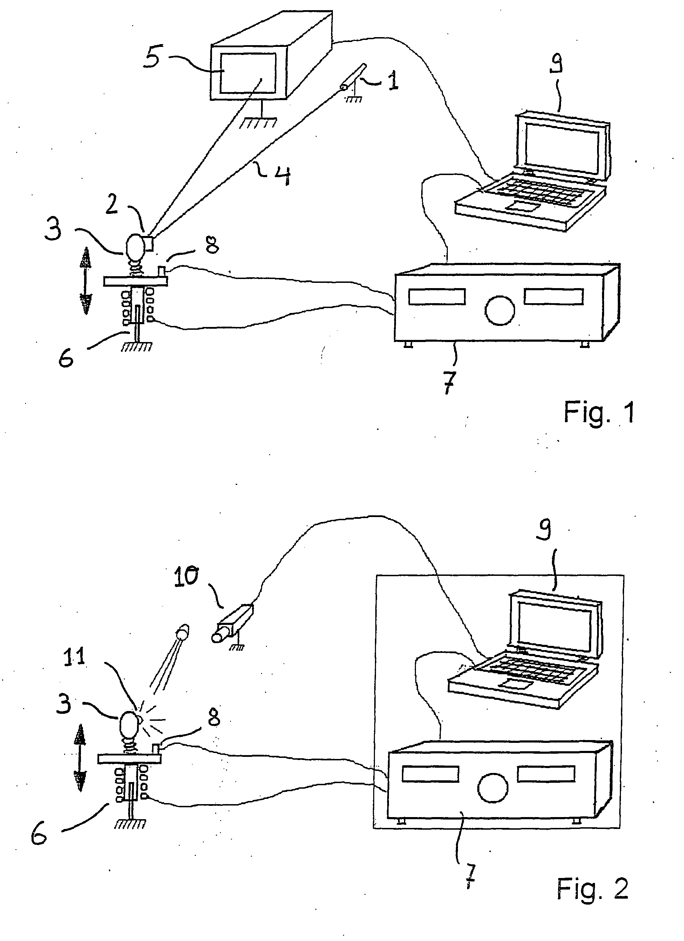

Die Figur 1 lässt eine schematische Darstellung einer ersten Ausführungsform einer erfindungsgemäßen Messeinrichtung zur Aufzeichnung einer Bewegungsspur erkennen, die mit einem Laser 1 erzeugt wird. Hierzu ist als Messmarke 2 ein Umlenkspiegel an einem Beobachtungspunkt eines Gegenstandes 3 angebracht, der den Laserstrahl 4 des Lasers 1 auf einer entfernt von dem Gegenstand 3 angeordneten Mattscheibe 5 projiziert. Die Mattscheibe 5 kann beispielsweise eine mit Aluminiumoxid bedampfte Glasplatte oder eine Platte aus Aluminiumoxid sein. Es ist anzustreben, dass die Bewegungsspur möglichst dünn ist, um eine größtmögliche Genauigkeit der Messung zu erreichen. Hierzu muss die Streuung reduziert werden, beispielsweise durch eine möglichst dünne Aluminiumoxidschicht Um ein Zwischenbild der Bewegungsspur bei möglichst geringer Streuung zu erzeugen, könnte auch Interferenzfiltermaterial zur Nebenlichtausblendung auf der dem Gegenstand 3 weisenden Oberfläche der Mattscheibe vorgesehen sein, die auf der gegenüberliegenden Seite eine Aluminiumoxidbedampfung aufweist. Die Nebenlichtausblenung kann aber auch durch geeignete Maßnahmen beispielsweise in der Kamera erfolgen.

Das Bild der Bewegungsspuren auf der Rückseite der Mattscheibe 5 wird mit einer in der Figur 1 nicht sichtbaren Beobachtungskamera aufgezeichnet, die auf die Rückseite der Mattscheibe 5 gerichtet ist.

Der Gegenstand 3 wird mit einem Schwingtisch 6 mit einer periodischen Schwingung angeregt. Die Frequenz der periodischen Schwingung wird in einem Schwingungsgenerator 7 eingestellt und erzeugt. Zur Regelung ist ein Beschleunigungs- oder allgemeiner Schwingungsaufnehmer am Schwingtisch 6 angeordnet, der mit dem Schwingungsgenerator 7 gekoppelt ist. In einem geschlossenen Regelkreis wird dann sichergestellt, dass die eingestellte Anregung mit einer periodischen Schwingung vom Schwingtisch 6 auch ausgeführt wird. Alternativ zu dem Schwingungsaufnehmer 8 könnte auch eine optische Wegmessung beispielsweise mit einem weiteren Laser, einem Umlenkspiegel als Schwingungsaufnehmer 8 und einer weiteren Mattscheibe vorgesehen sein. Auf diese Weise kann eine Synchronisation der Messeinrichtung mit dem Aufnehmer am Schwingtisch 6 anstelle des Schwingungsgenerators erfolgen.

Die im Schwingungsgenerator 7 eingestellte Frequenz kann optional an einen Computer als Auswertemittel 9 übertragen werden. Weiterhin wird das von der Beobachtungskamera aufgezeichnete Bildsignal der aufgenommenen Bewegungsspur an das Auswertemittel 9 übertragen.

Die Belichtungszeit der Beobachtungskamera wird dann in Abhängigkeit von der periodischen Schwingung so eingestellt, dass mindestens eine vollständige in einer Schwingungsperiode ausgeführte Bewegungsspur in einem. Bild aufgenommen wird. Alternativ kann die Belichtungszeit und die Bildfolgefrequenz der Beobachtungskamera auch so eingestellt sein, dass aufeinanderfolgende Bildaufnahmen verschiedene Teilstücke einer Bewegungsspur möglichst nahtlos hintereinander aufzeichnen.

Die Figur 2 lässt eine andere Ausführungsform der erfindungsgemäßen Messeinrichtung erkennen. Dabei ist die Beobachtungskamera 10 direkt ohne Mattscheibe auf den Gegenstand 3 gerichtet, an dem selbstleuchtende Messmarken 11 an dem mindestens einen Beobachtungspunkt angebracht sind. Als selbstleuchtende Messmarken können beispielsweise Leuchtdioden vorteilhaft eingesetzt werden.

Der Schwingungsgenerator 7 und die Auswertemittel 9 können, wie durch den Rahmen angedeutet, auch in einem Computer gemeinsam per Software realisiert werden, wobei die periodische Schwingung als Analogspannung über eine geeignete Schnittstelle des Computers, beispielsweise einer Soundkarte, ausgegeben wird. Das Ausgangssignal der periodischen Schwingung des Computers muß gegebenenfalls noch verstärkt werden.

Wesentlich für die Messmarken ist, dass sie sich deutlich vom Hintergrund absetzen und auf dem schwingenden Gegenstand 3 angebracht sind. Der mit der Messmarke markierte Beobachtungspunkt sollte in der aufgezeichneten Bewegungsspur als möglichst kleiner Punkt mit geringem Durchmesser wiedergegeben werden.

Ein Gegenstand 3 lässt sich allgemein als räumliches Vielmassensystem vernetzt mit zahlreichen Feder- und Dämpfungselementen beschreiben. Bei einer Fremderregung führen alle diese Teilmassen eigene translatorische und/oder rotatorische Schwingungen aus, die sich zudem gegenseitig beeinflussen. Bei einer periodischen Erregung eines solchen Gegenstandes 3 ändert sich der räumliche Schwingungszustand eines einzigen Beobachtungspunktes dieses Gegenstandes 3 fortwährend, wenn ein geeigneter Bereich an Erregerfrequenzen durchfahren wird. Wenn die Erregerschwingung allerdings periodisch ist, stellt sich eine Periodizität der erzwungenen Schwingung ein, wobei diejenigen Schwingungsanteile hervorgehoben werden, deren Erregerkreisfrequenz in der Nähe der Eigenkreisfrequenz (Resonanzfall) der betreffenden Feder-Masse-Anteile liegen. Bei einer geringen Dämpfung ruft die periodische Erregerschwingung deshalb eine erzwungene Schwingung mit gleicher Periodendauer hervor.

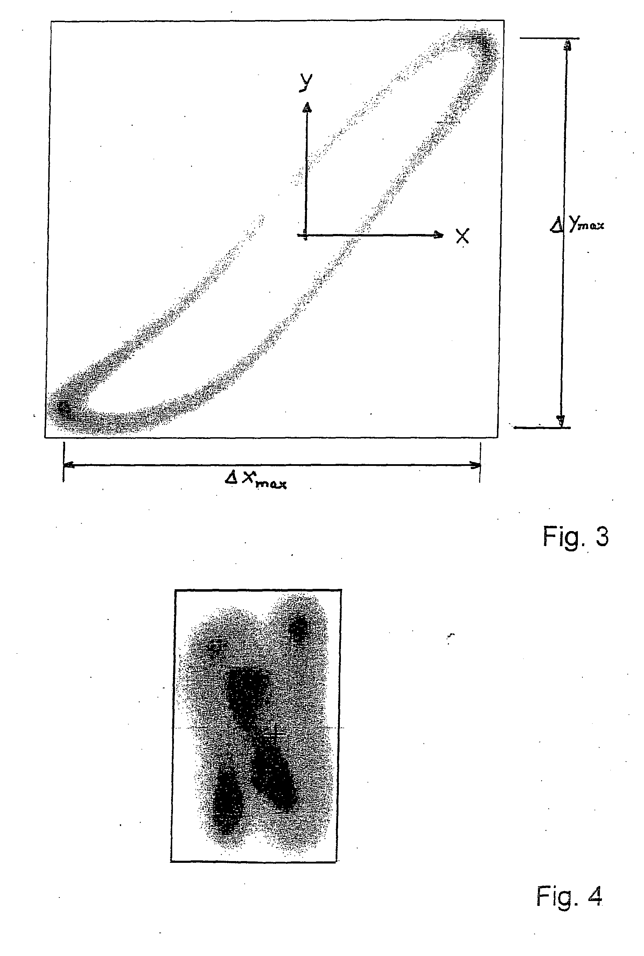

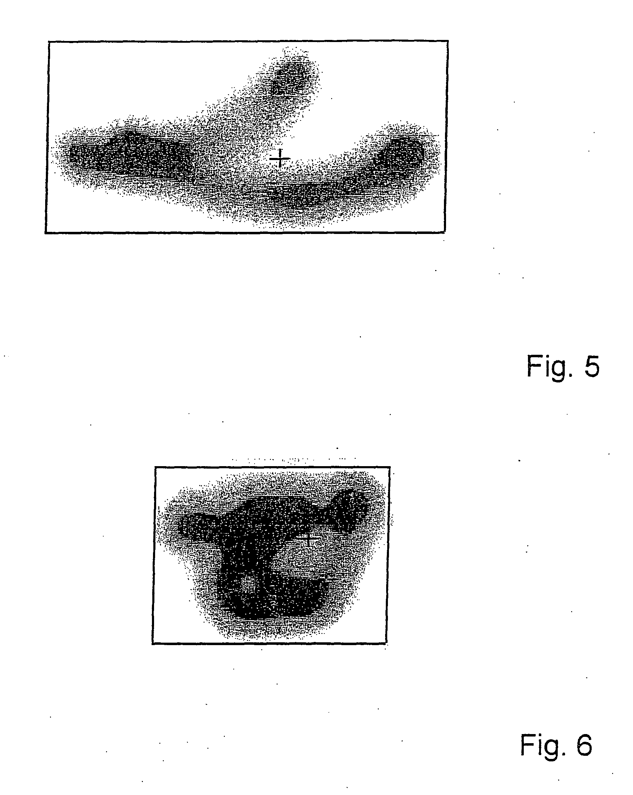

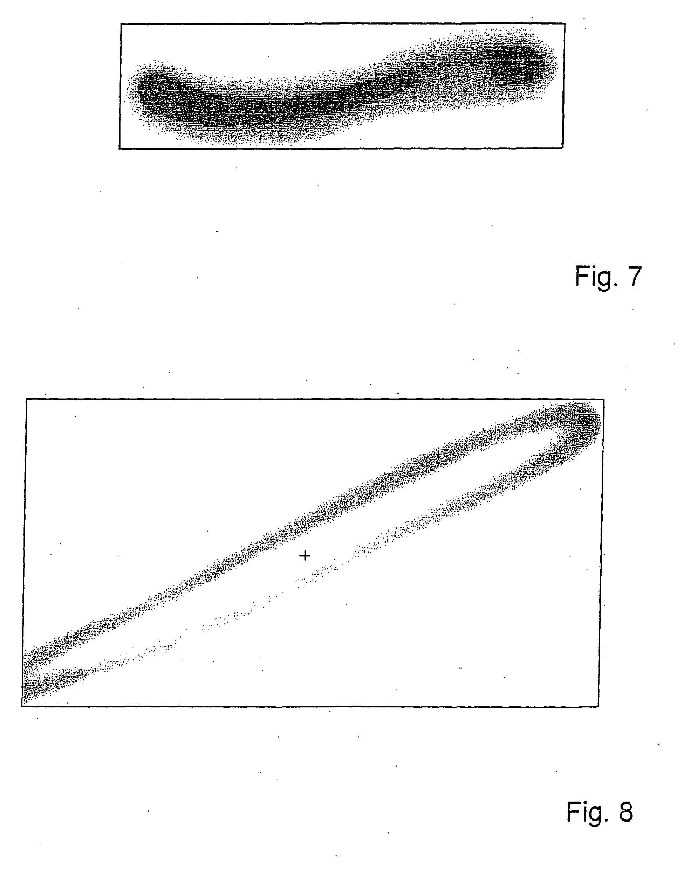

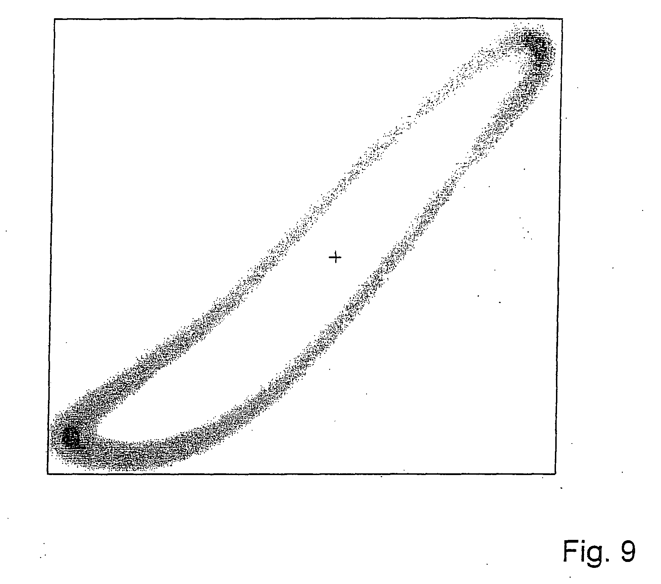

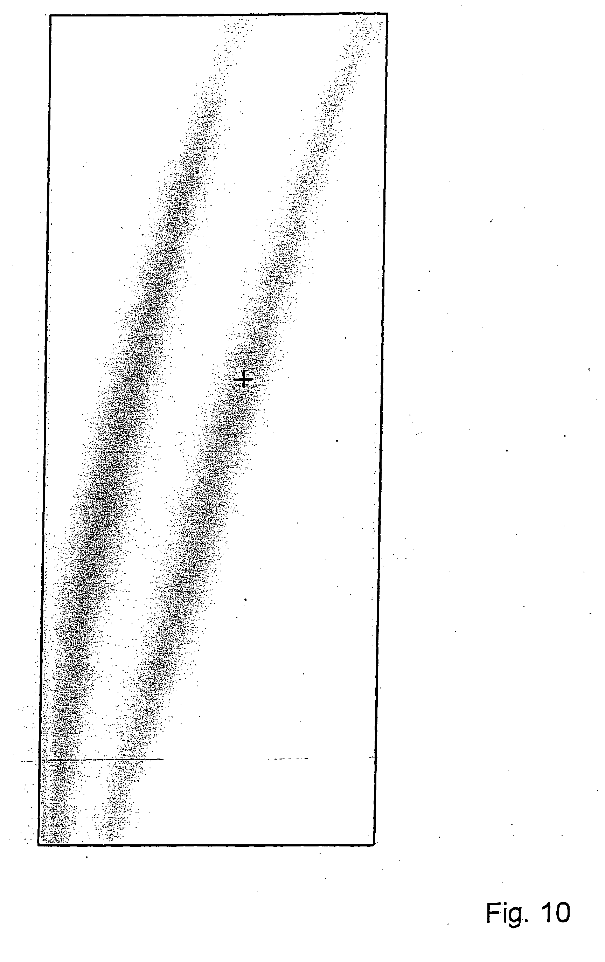

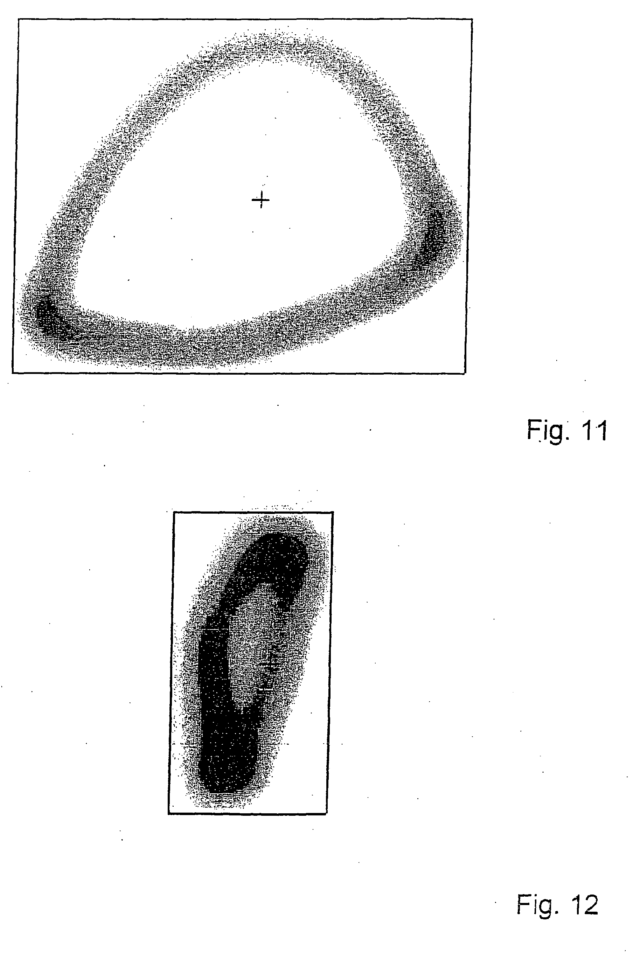

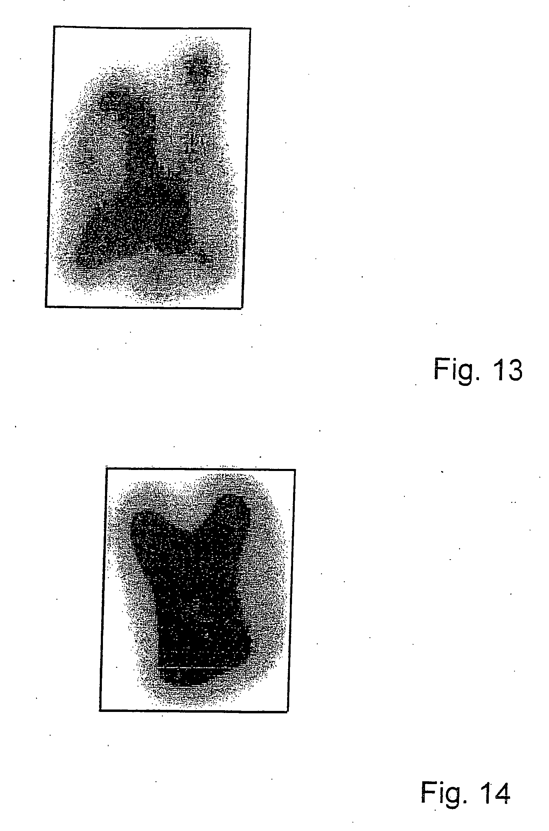

Die Figuren 3 bis 14 lassen nun eine Folge von Bewegungsspuren erkennen, die bei unterschiedlichen Frequenzen der periodischen Erregerschwingung aufgenommen worden sind. Dabei ist festzuhalten, dass die Bewegungsspuren sich für folgende Perioden der Erregerschwingung annähernd gleich wiederholen, so dass die Bewegungsspur einer folgenden Periode die Bewegungsspur der bereits aufgezeichneten früheren Perioden entsprechend nachzeichnen. Die Belichtungszeit sollte daher so eingestellt sein, dass sie eine Periodendauer oder ein Vielfaches davon beträgt.

Aus den Diagrammen ist auch erkennbar, dass die Bewegungsspuren örtlich unterschiedliche Helligkeiten aufweisen. Dies liegt daran, dass in den Amplituden der Erregerschwingung der Leuchtpunkt länger über einem Bildpixel verweilt, als es beispielsweise im Wendepunkt der periodischen Erregerschwingung der Fall ist, der folglich eine besonders dunkle Abbildung erfährt. Durch Auswertung der Helligkeiten der die Bewegungsspur abbildenden Bildpixel kann somit die örtliche Geschwindigkeit innerhalb eines periodischen Schwingungsverlaufes bestimmt werden.

Weiterhin kann, wie in der Figur 3 erkennbar, die maximale Auslenkung der Bewegungsspur z. B. in horizontaler x- und vertikaler y-Richtung mit Hilfe bekannter Bildauswerteverfahren bestimmt werden. Die maximalen Auslenkungen Δxₘₐₓ und Δyₘₐₓ sind Parameter, die mit Grenzwerten verglichen werden können. Bei Überschreiten eines bestimmten Grenzwertes für die eingestellte Frequenz der Erregerschwingung wird dann in einem Prüfvorgang erkannt, dass der Gegenstand 3 einen unzulässigen Zustand einnimmt.

Für einen solchen Prüfvorgang von Gegenständen 3 können neben der Variation der Erregerfrequenz auch andere Parameter, wie Amplitude, Beschleunigung, Geschwindigkeit etc. variiert werden. Um die gemessenen Bewegungsspuren anschließend interpretieren zu können, sollten diese Parameter in einer Messdatendokumentation vollständig aufgenommen werden, beispielsweise durch Abspeicherung in den Auswertemitteln 9. Die Steuerung des Schwingungsgenerators 7 und der Beobachtungskamera 10 kann ebenfalls durch die Auswertemittel 9 erfolgen. So können, wenn bei einer Erregerfrequenz genügend auswertbare Schwingungen erzielt worden sind, der nächste Frequenzschritt von den Auswertemitteln 9 vorgegeben werden.

Die Markierung mit dem Kreuz weist auf den Nullpunkt des karthesischen Koordinatensystems hin, der vorzugsweise aus dem nicht schwingenden Leuchtpunkt bestimmt wird.

Von einem nicht zu vernachlässigenden Einfluß bei der Auswertung der Grenzauslenkungen ist auch die Stärke oder Breite der Bewegungsspur. Die Breite einer Bewegungsspur sollte im Idealfall gegen Null gehen. Der Einfluss der Spurbreite ist dabei relativ zu den Auslenkungen zu sehen. Bei Drehschwingungen kann es daher vorteilhaft sein, eine große Mattscheibe und einen großen Messabstand zu wählen.

Bei der Aufzeichnung einer Bewegungsspur kann allerdings nicht, wie bei der Hochgeschwindigkeitsaufnahme einzelner Lichtpunkte, der Schwerpunkt der Lichtpunkte bestimmt und als idealer Koordinatenpunkt angenommen werden.

Zur Ermittlung einer idealen Bewegungsspur kann nunmehr der jeweilige Bewegungsvektor an Ortspositionen der Bewegungsspur berechnet und hieraus der Spurquerschnitt ermittelt und die ideale Spur erzeugt werden. Allerdings trifft dieses Verfahren auf seine Grenzen, wenn der Hin- und Rückweg einer Auslenkung Überlappungen zeigt und die gesamte Schwingung in einem einzigen Schwingungsbild erfasst wurde, wie im vorliegenden Fall. Dann sind weder Richtung noch Spurbreite daraus ermittelbar.

Daher wird vorgeschlagen, den idealen Verlauf der Bewegungsspur in Abhängigkeit der örtlichen Helligkeit der Bewegungsspur zu ermitteln. Dabei wird ausgenutzt, dass die Intensität einer Bewegungsspur gleichsam auf die Breite wirkt. Ein mit konstanter Helligkeit strahlender Messpunkt wird nämlich nicht nur dunkler abgebildet, wenn die Bewegungsgeschwindigkeit über den Bildpixeln steigt, sondern gleichzeitig auch schmaler. Sofern für keine konstante Spurhelligkeit gesorgt ist, variiert somit die Breite der Bewegungsspur in Abhängigkeit von ihrer Helligkeit.

In einem Initialisierungslauf wird ein ruhender Leuchtpunkt aufgezeichnet, während kontinuierlich die Helligkeit des Leuchtpunktes von ganz dunkel bis ganz hell variiert wird. Da der Leuchtpunkt über die Fläche seiner Abbildung keine konstante Helligkeit aufweist, kann der Extremwert seiner Helligkeit oder eine mittlere Helligkeit als Kenngröße verwendet und in einer Vergleichstabelle in Verbindung mit einem zugehörigen gemessenen Durchmesser des Leuchtpunktes aufgezeichnet werden. Bei der Auswertung der Bewegungsspur kann dann durch Zugriff auf die Vergleichstabelle für jeden gemessenen Helligkeitswert die ermittelte Abbildungsbreite ausgelesen und von der Bewegungsspurbreite zum Abzug gebracht werden.

Weiterhin ist es möglich, die örtliche Geschwindigkeit innerhalb der Bewegungsspur durch Auswertung der Helligkeiten der die periodische Schwingung abbildenden Bildpixel der Bewegungsspur zu bestimmen. Auch hier kann in einem Einmessvorgang bei konstant gewählter Kreisfrequenz die Umfangsgeschwindigkeit des Leuchtpunktes variiert werden, beispielsweise durch Verstellen des Versatzes oder Divergenzwinkels eines rotierenden Lasers, dessen Austrittsstrahl zur Rotationsachse einen Versatz aufweist oder divergiert. Die jeweils eingestellte Bewegungsgeschwindigkeit berechnet sich dann aus dem Kreisumfang, der vorzugsweise direkt von den gemessenen Pixelkoordinaten abgeleitet wird, und aus der vorgegebenen Kreisfrequenz. Auf diese Weise lassen sich für jede Periodendauer bzw. Belichtungszeit Bewegungsgeschwindigkeiten und deren zugehörige Helligkeiten der Leuchtpunkte tabellieren. Durch Rückgriff auf eine solche Vergleichstabelle können dann aus den örtlich gemessenen Helligkeiten der Leuchtpunkte einer beliebigen Bewegungsspur und aus der bekannten Belichtungszeit die örtlichen Bewegungsgeschwindigkeiten abgeleitet werden.

Weiterhin kann die Helligkeit der Lichtpunkte und/oder die Helligkeit der Messmarke 2 auf einfache Weise durch Messung der von den Bildpixeln der Beobachtungskamera 10 aufgenommenen Lichtmenge geregelt werden. Damit können bislang schlecht belichtete Anteile der Bewegungsspur stärker herausgearbeitet bzw. verschmierte, breite, überbelichtete Anteile der Bewegungsspur geglättet werden. In diesem Falle ist allerdings keine Bestimmung der örtlichen Geschwindigkeit mehr möglich.

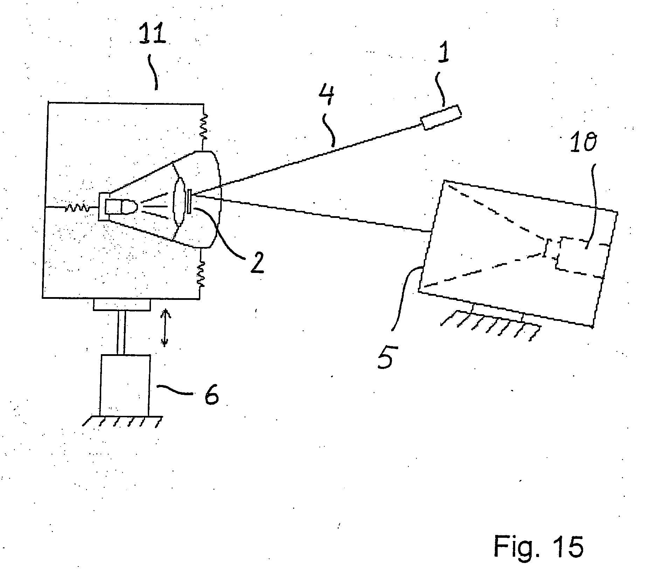

Wie in der Figur 15 skizziert ist, kann die Messeinrichtung gemäß Figur 1 beispielsweise zur Schwingungsprüfung von Fahrzeugscheinwerfern 11 genutzt werden, die definierten Schwingungsanregungen im Bereich von 10 bis 60 Hertz, Amplituden von etwa 1 bis 2 mm und Beschleunigungen von etwa 1 g ausgesetzt werden. Damit werden Schwingungsanregungen simuliert, die im Normalbetrieb, beispielsweise durch Fahrbahnunebenheiten, Windkräfte, Motorschwingungen etc. auf die Fahrzeugscheinwerfer 11 ausgeübt werden. Diese Schwingungsanregungen können, insbesondere wenn die Fahrzeugscheinwerfer Stellelemente für eine Leuchtweitenregelung und Kurvenführung haben, zu einer undefinierten Schwingung des Lichtkegels führen. Diese Verlagerung des Lichtkegels darf sich jedoch nur in zulässigen Grenzen bewegen, die mit der erfindungsgemäßen Messeinrichtung überprüft werden können.

Bei der in der Figur 2 dargestellten zweiten Ausführungsform der Messeinrichtung sind nachteilig Auslenkungen der Beobachtungspunkte quantitativ nicht ohne Hilfsmittel zu bestimmen. Mit einem Referenzstab mit zwei beleuchteten Leuchtpunkten, deren Abstand bekannt ist, ist eine quantitative Messung der Auslenkung möglich, wenn im Initialisierungslauf der Referenzstab in die Schwingungsebene gelegt wird. Bei der späteren Messung werden sämtliche Auslenkungen dann auf diesen Maßstab bezogen. Drehschwingungen werden allerdings bei einer solchen Messanordnung nur dann hervorgehoben, wenn der Drehpunkt nicht in der Nähe des Leuchtpunktes sitzt.

Mit einer klassischen photogrammmetrischen Messeinrichtung mit mindestens zwei auf denselben Bildbereich eingemessenen Beobachtungskameras 10 ist eine Bestimmung der Bewegungsspur des Leuchtpunktes in drei Dimensionen möglich. Auch hier werden Drehschwingungen nur dann hervorgehoben, wenn der Drehpunkt nicht in der Nähe des Leuchtpunktes sitzt.

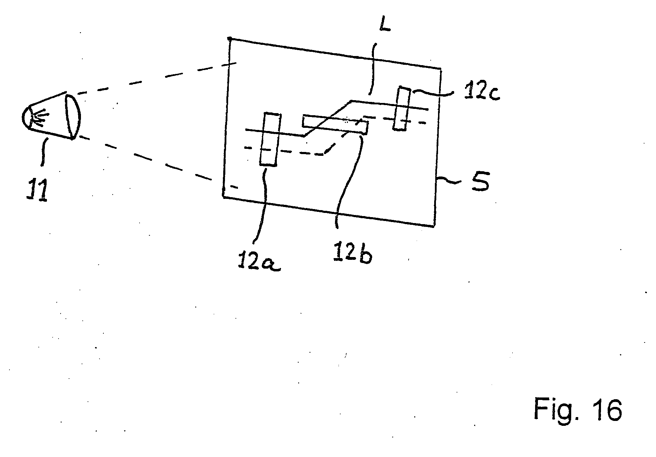

Die Figur 16 lässt eine Skizze einer Messeinrichtung zur Ermittlung der Lageänderung der Hell-Dunkel-Grenze eines Lichtkegels eines Fahrzeugscheinwerfers erkennen. Die Einmessung der Lichtkegel zur Vermeidung einer Blendwirkung erfolgt bekanntermaßen mit einer Projektionsfläche und einer Kamera, die in geringem Abstand (etwa 50 cm) vom Fahrzeugscheinwerfer positioniert wird, wobei die Einstellung auf einen Projektionsabstand von 10 m hochgerechnet wird. Bei einer Schwingung des Fahrzeugscheinwerfers verändert sich die charakteristische Hell-Dunkel-Grenze des Lichtkegels bestehend aus zwei parallelen voneinander versetzten Geradenstücken und einer Diagonale, die die einander zugewandten Enden der Geradenstücke verbindet. Die aufgenommene Bewegungsspur besteht nunmehr nicht nur aus einem Lichtpunkt, sondern aus der gestuften Geraden des Lichtkegels und deren Verlagerung, so dass bei einer Langzeitaufnahme im Bereich des verlagerten Lichtkegels eine Graufläche im Kontrast zu den die Graufläche umgebenden Weißflächen und Schwarzflächen entsteht. Die Breite der Graufläche kann als Schwingungskenngröße unmittelbar ausgewertet werden. Allerdings überschneiden sich durch Seitwärts-Verlagerung der Geradenfunktion die Kanten zwischen der Geraden und Diagonalen. Um diese sich überschneidenden Bereiche besser herauszuarbeiten, sollte die Belichtungszeit und Belichtungszeit und Bildfolgefrequenz entsprechend der örtlichen Lageänderung gesteuert werden. Hilfreich für die Auswertung ist, wenn der vollständige Verlauf der Hell-Dunkel-Grenze zunächst zu Beginn durch eine Aufnahme in der Anfangsruhelage erfasst wird und fortan mit Methoden der Bildverarbeitung bestmöglich in die Aufnahmen eingepasst wird, die während der Schwingung gemacht werden. Die jeweiligen Lagen der Hell-Dunkel-Grenze lassen sich dann eindeutig durch Geradengleichungen und Schnittpunktkoordinaten beschreiben, die wenig Datenspeicher benötigen.

Wie in der Figur 16 skizziert, können auch kleine ausgewählte Bereiche der charakteristischen Hell-Dunkel-Grenze mit mindestens drei sich horizontal bzw. vertikal erstreckenden Bildfenstern (z. B. mit frei adressierbaren CMOS-Bildaufnehmern) betrachtet werden. Aus der örtlichen Verlagerung der Hell-Dunkel-Grenze in den Bereichen kann dann aufgrund des bereits bekannten vollständigen Hell-Dunkel-Grenzen-Verlaufes (d. h. inklusive der Steigung der Diagonalen) jeweils die Lageänderung des Lichtkegels vollständig bestimmt werden. Wegen der geringen Anzahl von Pixeln, die bei der Abfrage der Fensterdaten beteiligt sind, gelingen hier

Abtastraten der jeweils vollständigen Lageerkennung (vollständige Abfrage sämtlicher Fenster), die derzeit über 1 kHz wiegen. Dies ermöglicht in der Regel, die Bildfenster in Echtzeit der Verlagerung nachzuführen. Die jeweilige Lage der Hell-Dunkel-Grenze setzt sich daher aus den adressierten Fensterpositionen und den Positionen der gemessenen Hell-Dunkel-Übergänge in den Fenstern zusammen. Auf diese Weise lässt sich die Verlagerungsschwingung der Hell-Dunkel-Grenze eindeutig und vollständig erfassen. Auf eine Synchronisation zwischen Schwingungsgenerator 7 und Aufnahmeeinrichtung kann verzichtet werden, wenn die Lageverfolgung in Echtzeit geschieht, d. h. die Bildfenster der schwingenden Hell-Dunkel-Grenze schnell genug folgen. Gelingt dies einem Bildfenster einmal nicht, sollte abgewartet werden, bis die Hell-Dunkel-Grenze erneut in die Bildfenster eintritt. Dies ist nach einer Schwingungsperiode der Fall.

## Patentansprüche

1. Messeinrichtung zur Aufzeichnung der Bewegungsspur von Beobachtungspunkten an schwingenden Gegenständen (3), die mit einer periodischen Schwingung beaufschlagt werden, mit mindestens einer Messmarke (2) zur optischen Markierung mindestens eines Beobachtungspunktes auf den Gegenständen (3) und einer elektronischen Beobachtungskamera (10), **dadurch gekennzeichnet, dass** in Abhängigkeit von der Frequenz der beaufschlagten periodischen Schwingung die Belichtungszeit der Beobachtungskamera (10) zur Aufzeichnung einer in mindestens einer Schwingungsperiode ausgeführten Bewegungsspur oder die Belichtungszeit und Bildfolgefrequenz aufeinanderfolgender Bildaufnahmen zur Aufzeichnung von verschiedenen Teilstücken einer Bewegungsspur einstellbar ist.

2. Messeinrichtung nach Anspruch 1, **gekennzeichnet durch** einen an dem Gegenständ (3) an einem Beobachtungspunkt angeordneten Umlenkspiegel als Messmarke (2), einen auf den Umlenkspiegel gerichteten Laser (1) und einer entfernt von dem Gegenstand angeordnete Mattscheibe (5) zur Projektion des am Umlenkspiegel reflektierten Laserstrahls (4), wobei die Beobachtungskamera (10) auf die Mattscheibe (5) zur Aufzeichnung der projizierten Bewegungsspur ausgerichtet ist.

3. Messeinrichtung nach Anspruch 1, **gekennzeichnet durch** mindestens eine Lichtleitfaser, wobei das mindestens eine Ende der Lichtleitfaser oder eines Lichtleitfaserbündels als Messmarke (2) an dem mindestens ein Beobachtungspunkt des Gegenstandes (3) angebracht ist.

4. Messeinrichtung nach einem der vorhergehenden Ansprüche, **gekennzeichnet durch** eine an mindestens einem Beobachtungspunkt angebrachte selbstleuchtende, reflektierende oder Farb-Messmarke (4).

5. Messeinrichtung nach einem der vorhergehenden Ansprüche, **gekennzeichnet durch** Regelungsmittel zur Einstellung einer Blende der Beobachtungskamera (10) und/oder der Helligkeit der Messmarken (2) in Abhängigkeit von der Helligkeit von Teilen der aufgezeichneten Bewegungsspur.

6. Messeinrichtung nach einem der vorhergehenden Ansprüche, **gekennzeichnet durch** Auswertemittel (9) zur Auswertung der aufgezeichneten Bewegungsspur bei jeweils einer festgelegten Frequenz der periodischen Schwingung **durch** Bestimmung der maximalen Auslenkung der Bewegungsspur in horizontaler und vertikaler Richtung als Schwingungskenngrößen.

7. Messeinrichtung nach Anspruch 6, **dadurch gekennzeichnet, dass** die Auswertemittel (9) zur Ermittlung der Resonanzfrequenz als in absoluten maximalen Auslenkungen der Bewegungsspur zugeordneten Frequenzen aus der für die Vielzahl variierender Frequenzen bestimmten relativen maximalen Auslenkungen ausgebildet sind.

8. Messeinrichtung nach Anspruch 6 oder 7, **dadurch gekennzeichnet, dass** die Auswertemittel (9) die maximale Auslenkung auf einen absoluten Nullpunkt eines von der Beobachtungskamera (10) aufgenommenen Lichtpunktes bezieht.

9. Messeinrichtung nach einem der vorhergehenden Ansprüche, **dadurch gekennzeichnet, dass** die Auswertemittel (9) zur Bestimmung der örtlichen Geschwindigkeit der Leuchtpunkte der Bewegungsspur in Abhängigkeit von der Helligkeit der Leuchtpunkte ausgebildet sind.

10. Messeinrichtung nach Anspruch 9, **dadurch gekennzeichnet, dass** die Auswertemittel (9) eine abgespeicherte Vergleichstabelle mit einer Vielzahl von in Abhängigkeit von Belichtungszeiten oder Periodendauern der periodischen Schwingung aufgenommenen Helligkeitswerten der Leuchtpunkte und zugeordneten örtlichen Bewegungsgeschwindigkeiten haben, wobei die örtliche Bewegungsgeschwindigkeit aus der Vergleichstabelle in Abhängigkeit von aktuell gemessenen Leuchtpunkt-Helligkeitswerten und der aktuell eingestellten Belichtungszeit oder Periodendauer ausgelesen wird.

11. Messeinrichtung nach einem der vorhergehenden Ansprüche, **dadurch gekennzeichnet, dass** die Auswertemittel (9) eine abgespeicherte Vergleichstabelle mit einer Vielzahl von in Abhängigkeit vom Durchmesser eines Leuchtpunktes aufgezeichneten Helligkeitswerten des Leuchtpunktes haben, wobei aus der aufgezeichneten Bewegungsspur und den zugehörigen Helligkeitswerten eine idealisierte Bewegungsspur durch Verminderung der Bewegungsspurbreite um die aus der Vergleichstabelle jeweils für die Leuchtpunkte ausgelesenen Durchmesser berechnet wird.

12. Messeinrichtung nach einem der vorhergehenden Ansprüche, **gekennzeichnet durch** mindestens zwei auf denselben Bildbereich ausgerichtete Beobachtungskameras (10) zur dreidimensionalen Bestimmung der Bewegungsspur.

13. Messeinrichtung nach einem der vorhergehenden Ansprüche, **dadurch gekennzeichnet, dass** die Messmarke (2) der Lichtkegel eines Fahrzeugscheinwerfers (11) ist und die Auswertemittel (9) zur Bestimmung der Lageänderung der Hell-Dunkel-Grenzen des Lichtkegels und Ermittlung von Schwingungskenngrößen aus der Lageänderung ausgebildet ist.

14. Messeinrichtung nach Anspruch 13, wobei der Lichtkegel durch zwei voneinander beabstandete und versetzte parallele Geradenstücke und eine die aneinander zugewandten Enden der Geradenstücke verbindende Diagonale als Hell-Dunkel-Grenze definiert ist, **dadurch gekennzeichnet, dass** jeweils mindestens ein adressierbares Bildfenster eines Bildsensors vertikal auf den Geradenstücken und mindestens ein Bildsensor horizontal auf der Diagonalen ausgerichtet ist.

15. Verfahren zur Messung von Schwingungsvorgängen an schwingenden Gegenständen (3) durch Aufzeichnung der Bewegungsspur von Beobachtungspunkten, die mit mindestens einer Messmarke (2) optisch markiert sind, **gekennzeichnet durch**
- Beaufschlagen des Gegenstandes (3) mit einer periodischen Schwingung,
- Einstellen der Belichtungszeit einer Beobachtungskamera (10) zur Aufzeichnung mindestens einer vollständigen in einer Schwingungsperiode ausgeführten Bewegungsspur oder der Belichtungszeit und Bildfolgefrequenz aufeinanderfolgender Bildaufnahmen zur Aufzeichnung von verschiedenen Teilstücken einer Bewegungsspur in Abhängigkeit von der Frequenz der beaufschlagten periodischen Schwingung, und
- Aufzeichnen der Bewegungsspur.

16. Verfahren nach Anspruch 15, **gekennzeichnet durch**
- Ausrichten eines Laserstrahls (4) auf einen Umlenkspiegel als Messmarke, der an einem Beobachtungspunkt des Gegenstandes angeordnet ist,
- Projizieren des Laserstrahls (4) auf eine entfernt von dem Gegenstand (3) angeordnete Mattscheibe (5), und
- Aufzeichnen der auf der Mattscheibe (5) projizierten Bewegungsspur.

17. Verfahren nach Anspruch 15, **gekennzeichnet durch** Aufzeichnen einer Bewegungsspur **durch** Betrachten von selbstleuchtenden oder reflektierenden Messmarken (2) oder von Laserdioden oder Enden von Lichtleitphasern als Messmarken (2) mit der Beobachtungskamera (10).

18. Verfahren nach einem der Ansprüche 15 bis 17, **gekennzeichnet durch** Einstellen einer Blende der Beobachtungskamera (10) und/oder der Helligkeit der Messmarken (2) in Abhängigkeit von der Helligkeit von Teilen der aufgezeichneten Bewegungsspur.

19. Verfahren nach einem der Ansprüche 15 bis 18, **gekennzeichnet durch** Bestimmen der maximalen Auslenkung einer geschlossen, umlaufenden Bewegungsspur in horizontaler und vertikaler Richtung bei jeweils einer festgelegten Frequenz der periodischen Schwingung als Schwingungsparameter.

20. Verfahren nach einem der Ansprüche 15 bis 18, **gekennzeichnet durch** Ermitteln von Resonanzfrequenzen aus der Vielzahl der für die variierenden Frequenzen aufgezeichneten relativen maximalen Auslenkungen **durch** Ermittlung der absoluten maximalen Auslenkungen und Erkennen der zugehörigen Frequenzen als Resonanzfrequenzen.

21. Verfahren nach Anspruch 19 oder 20, **gekennzeichnet durch** Beziehen der maximalen Auslenkung auf einen absoluten Nullpunkt des von der Beobachtungskamera (10) aufgenommenen Auftreffpunktes eines Lichtstrahls bei nicht schwingender Messmarke (2).

22. Verfahren nach einem der Ansprüche 15 bis 21, **gekennzeichnet durch** Bestimmen der örtlichen Geschwindigkeit der Leuchtpunkte der Bewegungsspur aus der Helligkeit der Leuchtpunkte.

23. Verfahren nach Anspruch 22, **gekennzeichnet durch**
- Messen einer Vielzahl von Helligkeitswerten der Leuchtpunkte einer Bewegungsspur in Abhängigkeit von bekannten Belichtungszeiten oder Periodendauern der periodischen Schwingung und von den zugehörigen Bewegungsgeschwindigkeiten der Leuchtpunkte,
- Aufzeichnen der Helligkeitswerte in Abhängigkeit von der Bewegungsgeschwindigkeit und der Belichtungszeiten oder Periodendauern in einer Vergleichstabelle, und
- Auslesen der örtlichen Bewegungsgeschwindigkeiten eines Leuchtpunktes bei einer gemessenen aktuellen Helligkeit des Leuchtpunktes und der bekannten Belichtungszeit oder Periodendauer aus der Vergleichstabelle.

24. Verfahren nach Anspruch 23, **gekennzeichnet durch** Einmessen der Vielzahl von Helligkeitswerten mit einem rotierenden Laser, dessen Austrittsstrahl zur Rotationsachse einen Divergenzwinkel aufweist, wobei zur Einstellung der Bewegungsgeschwindigkeiten bei konstanter Umdrehungsgeschwindigkeit des Lasers der Divergenzwinkel des Austrittsstrahls variiert wird.

25. Verfahren nach einem der Ansprüche 15 bis 24, **gekennzeichnet durch**
- Messen einer Vielzahl von Helligkeitswerten eines Leuchtpunktes und des jeweiligen Durchmessers des Leuchtpunktes,
- Aufzeichnen der Helligkeitswerte in Abhängigkeit von dem Durchmesser in einer Vergleichstabelle, und
- Berechnen einer idealisierten Bewegungsspur **durch** Verminderung der Breite der Leuchtpunkte der aufgezeichneten Bewegungsspur um die für den jeweiligen Helligkeitswert der Leuchtpunkte aus der Vergleichstabelle ausgelesenen Durchmesser.

26. Verfahren nach einem der Ansprüche 15 bis 25, **gekennzeichnet durch** Modulieren des Lichtsignals für die optische Markierung, insbesondere **durch** Pulsen eines Laser oder Farbwechselmodulation.

27. Verfahren nach Anspruch 26, **gekennzeichnet durch** Bestimmen der Bewegungsgeschwindigkeit des Beobachtungspunktes aus der Ortsfrequenz der Bewegungsspur.

28. Verfahren nach Anspruch 26 oder 27, **gekennzeichnet durch** Codieren des Lichtsignals zur Ermittlung der Bewegungsrichtung.

29. Verfahren nach einem der Ansprüche 15 bis 28 zur Ermittlung der Lageänderung der Hell-Dunkel-Grenze eines Lichtkegels eines Fahrzeugscheinwerfers durch Projizieren des Lichtpegel auf eine Projektionsfläche und Aufnehmen des projizierten Lichtkegels mit der Beobachtungskamera (10).

30. Verfahren nach Anspruch 29, **gekennzeichnet durch** Steuerung der Belichtungszeit- und Bildfolgefrequenz in Abhängigkeit von der Verlagerungsrichtung zur Abgrenzung von sich überschneidenen Bereichen des Lichtkegels bei Verlagerung.

31. Verfahren nach Anspruch 29, **gekennzeichnet durch** lokales Messen der Verlagerung ausgewählter Bereiche des Lichtkegels an zwei Parallelen versetzten Geradenstücken und einer die einander zugewandten Enden der Geradenstücke verbindenden Diagonale und Berechnen der Lageänderung der Hell-Dunkel-Grenze des Lichtkegels aus der ermittelten Verlagerung in den ausgewählten Bereichen.
